# EUROPEAN PATENT APPLICATION

(11) **EP 4 455 196 A1**
(43) Date of publication of application: **30.10.2024**
(21) Application number: 22910808.9
(22) Date of filing: 01.12.2022
(51) Int. Cl.: C08J 5/06, B29C 70/14, B29C 70/50

(54) **SHEET MOLDING COMPOUND AND METHOD FOR MANUFACTURING SAME**

(30) Priority: 23.12.2021 JP 2021209184
(71) Applicant: DIC Corporation, Tokyo 174-8520 (JP)
(72) Inventor: HITOMI Kazutoshi, Takaishi-shi, Osaka 592-0001 (JP)
(74) Representative: TBK
(86) International application number: PCT/JP2022/044318
(87) International publication number: WO 2023/120091

(57) **Abstract**

An object is to provide a sheet molding compound capable of controlling resin flowability at an edge during compression molding and having excellent stretchability, and a method for manufacturing the same. A sheet molding compound including reinforcing fibers impregnated with a resin composition is used, in which the proportion (X1) of reinforcing fibers oriented at 30° or less in reinforcing fibers contained in a section (A1) within 20 mm from an edge of the sheet molding compound is 28 to 90%.

## Description

### Technical Field

The present invention relates to a sheet molding compound and a method for manufacturing the same.

### Background Art

A thermosetting resin reinforced with reinforcing fibers, commonly known as FRP, is used in many fields, including industrial parts, housing materials, and automotive parts. Furthermore, fiber-reinforced resin composite materials made of thermosetting resins such as epoxy resins and unsaturated polyester resins reinforced with carbon fibers as reinforcing fibers have been attracting attention because of their characteristics including high heat resistance and mechanical strength while being lightweight. Such fiber-reinforced resin composite materials are increasingly used in various structural applications. In addition, sheet molding compounds (which may be abbreviated as "SMC") are widely used because of their productivity and a wide range of design applications: for example, SMC uses discontinuous fibers as reinforcing fibers and thus can be molded into a wide range of shapes compared to continuous fibers, leftovers can be reused, and different material members can be inserted (see, for example, PTL 1).

One of methods for molding the SMC is heating compression molding. For example, a molded article is produced by shaping a molding material in a mold at 110 to 180°C and a pressure of 1 to 20 MPa, and then holding these molding conditions for a predetermined time.

On the other hand, the reinforcing fibers used in SMC are spread in a random orientation and the reinforcing fibers are generally made isotropic. The reinforcing fibers at SMC edges are also isotropic.

The resin at the edges of SMC lacks thickening due to air and moisture, and during the compression molding, the resin sometimes flows in the mold before the reinforcing fibers, leaving only the reinforcing fibers. The molded articles obtained from such SMC edges have insufficient strength and appearance and may have limited use.

### Citation List

### Patent Literature

PTL 1: Japanese Patent No. 6241583

### Summary of Invention

### Technical Problem

An object of the present invention is to provide a sheet molding compound capable of controlling resin flowability at edges during compression molding and having excellent stretchability, and a method for manufacturing the same.

### Solution to Problem

The inventor of the present invention has found that a sheet molding compound with a specific orientation of reinforcing fibers can achieve the object, and completed the present invention.

More specifically, the present invention relates to a sheet molding compound including reinforcing fibers impregnated with a resin composition, in which a proportion (X1) of reinforcing fibers oriented at 30° or less in reinforcing fibers contained in a section (A1) within 20 mm from an edge of the sheet molding compound is 28 to 90%. Advantageous Effects of Invention

The sheet molding compound and the molded article obtained from the present invention are excellent in impregnation of carbon fibers and the like and can be suitably used for exteriors and structures of automotive parts, railroad vehicle parts, aerospace machine parts, ship parts, housing equipment parts, sports parts, light vehicle parts, construction civil engineering parts, office automation equipment, and the like.

### Description of Embodiments

A sheet molding compound of the present invention is a sheet molding compound including reinforcing fibers impregnated with a resin composition. A proportion (X1) of reinforcing fibers oriented at 30° or less in reinforcing fibers contained in a section (A1) within 20 mm from an edge of the sheet molding compound is 28 to 90%. This particular orientation provides a sheet molding compound with an excellent balance between resin flowability and stretchability that cannot be obtained with isotropy. The proportion of reinforcing fibers in the present invention is defined as the proportion of the number of fiber bundles.

In the present invention, the fiber orientation of SMC is 0° in a direction parallel to an MD direction (manufacturing flow direction of SMC) and 90° in a direction perpendicular thereto. Both an inclination of 30° in the right direction and an inclination of 30° in the left direction are considered to be 30°. When fibers are flexed, the angle is measured assuming that a line connecting both ends of the fiber is the fiber direction.

The edge of SMC is the outermost portion in which both the resin and the reinforcing fibers are present. The section (A1) within 20 mm from the edge is a region up to 20 mm from the edge in a direction perpendicular to the MD direction. A section (A2) exceeding 20 mm from the edge is a region other than the section (A1).

The proportion (X1) of reinforcing fibers oriented at 30° or less in reinforcing fibers contained in the section (A1) is preferably 30 to 88%, more preferably 34 to 86%, and even more preferably 40 to 80%, because the balance between resin flowability and stretchability is further improved.

The proportion (X2) of reinforcing fibers oriented at 30° or less in reinforcing fibers contained in the section (A2) is preferably 25 to 40%, because it is preferable that the fibers after molding are isotropic.

The proportion (X1) of the reinforcing fibers is calculated by selecting 50 measurement points (20 mm × 50 mm) on each of left and right sides from the region of the section (A1), and measuring the angle of each fiber bundle in this range with a protractor. The fiber bundles only partially contained in the region of the section (A1) are also measured.

The proportion (X2) of the reinforcing fibers is calculated by selecting 50 measurement points (20 mm × 50 mm) from the region of the section (A2), and measuring the angle of each fiber bundle in this range with a protractor.

A method for manufacturing SMC of the present invention involves, for example: applying a resin composition to carrier films placed above and below to be a uniform thickness (application step); spreading reinforcing fibers on one of the resin composition-applied surfaces (addition process); sandwiching the reinforcing fibers between the resin compositions on the carrier films placed above and below, and then passing the whole between impregnation rolls to impregnate the reinforcing fibers with the resin composition by applying a pressure (impregnation step); and winding the resulting product into a roll or folding it into a zigzag shape.

The orientation of the fibers at the edge of the SMC of the present invention can be controlled in the above addition step, for example, by blowing compressed air from both ends immediately before carbon fibers are uniformly dropped from the air to make a uniform thickness.

The fiber orientation in the MD direction (SMC manufacturing flow direction) can be increased, for example, by increasing the number of compressed air outlets (with a narrower pitch) and/or increasing the compressed air pressure. On the other hand, the fiber orientation in the MD direction can be reduced, for example, by reducing the number of compressed air outlets and/or reducing the compressed air pressure.

The orientation of the fibers can also be controlled by other methods including: installing plates that do not touch the resin on the carrier film on both ends and making adjustments after carbon fibers fall; adjusting the internal structure of a cutter for carbon fibers or adjusting a flow of blown air; applying the air in a certain direction during (before) falling onto the resin on the carrier film; and applying a plate or the like to carbon fibers during falling.

Examples of the resin in the resin composition used in the SMC of the present invention include thermosetting resins such as epoxy resins, vinyl ester resins, vinyl urethane resins, unsaturated polyester resins, phenolic resins, melamine resins, and furan resins. In terms of mechanical properties such as strength after molding, epoxy resins, vinyl ester resins, and vinyl urethane resins are more preferred. These resins can be used alone or in combination of two or more.

The viscosity of the resin composition has a viscosity ratio (V₃₀/V₂₀) of 0.5 to 0.9 between viscosity V₂₀ (m·Pas) at 20°C and viscosity V₃₀ (m·Pas) at 30°C, because the impregnation of SMC is further improved.

The resin composition can contain other than the resin, for example, a diluent, a curing agent, a curing accelerator, a polymerization inhibitor, a filler, a low profile additive, thermoplastic resin particles, a mold release agent, a thickener, a viscosity reducer, a pigment, an antioxidant, a plasticizer, a flame retardant, an antimicrobial agent, a UV stabilizer, a storage stabilizer, a reinforcing material, a light curing agent, and the like.

The filler includes inorganic and organic compounds and can be used to adjust physical properties such as molded article strength, elastic modulus, impact strength, and fatigue durability.

Examples of the inorganic compounds include calcium carbonate, magnesium carbonate, barium sulfate, mica, talc, kaolin, clay, celite, asbestos, barite, baryta, silica, silica sand, dolomite limestone, gypsum, aluminum fine powder, hollow balloon, alumina, glass powder, hydroxide aluminum, white limestone, zirconium oxide, antimony trioxide, titanium oxide, molybdenum dioxide, and iron powder.

Examples of the organic compounds include natural polysaccharide powders such as cellulose and chitin, and synthetic resin powders. As the synthetic resin powders, organic powders composed of hard resin, soft rubber, elastomer, or polymer (copolymer), and particles with multilayer structures such as core-shell structure can be used. Specific examples include particles of butadiene rubber and/or acrylic rubber, urethane rubber, silicone rubber, and the like, polyimide resin powders, fluororesin powders, and phenolic resin powders. These fillers can be used alone or in combination of two or more.

Examples of the mold release agent include zinc stearate, calcium stearate, paraffin wax, polyethylene wax, carnauba wax, and fluorine-based compounds. Preferable examples are fluorine-based compounds and paraffin wax. These mold release agents can be used alone or in combination of two or more.

Examples of the thickener include metal oxides and metal hydroxides such as magnesium oxide, magnesium hydroxide, calcium oxide, and calcium hydroxide, and acrylic resin-based fine particles. The thickener can be selected as appropriate depending on the ease of handling of the fiber-reinforced molding material of the present invention. These thickeners can be used alone or in combination of two or more.

The resin composition is obtained by blending and dispersing the above components using an ordinary blender such as mixer, intermixer, planetary mixer, roll mill, kneader, and extruder.

The reinforcing fibers used in the SMC of the present invention are fibers cut into a length of 2.5 to 50 mm and more preferably fibers cut into 5 to 40 mm, because in-mold flowability during molding, and appearance and mechanical properties of molded articles are further improved.

Examples of the fiber reinforcing material include glass fibers, carbon fibers, silicon carbide fibers, pulp, hemp, cotton, nylon, polyester, acrylic, polyurethane, polyimide, or polyamide fibers of Kevlar, Nomex or other aramids. Among these, carbon fibers are preferred because high-strength molded articles can be obtained.

Various kinds of carbon fibers such as polyacrylonitrile-based, pitch-based, and rayon-based can be used as the carbon fibers. Among these, polyacrylonitrile-based carbon fibers are preferred because high-strength carbon fibers can be easily obtained.

The number of filaments in a fiber bundle used as the carbon fibers is preferably 1,000 to 60,000, because the resin impregnation and the mechanical properties of molded articles are further improved.

The content of the fiber reinforcing material in the components of the SMC of the present invention is preferably in the range of 25 to 80% by mass, more preferably in the range of 40 to 70% by mass, and particularly preferably 45 to 65% by mass, because the mechanical properties of the resulting molded articles are further improved. If the fiber content is too low, high-strength molded articles may fail to be obtained. If the carbon fiber content is too high, the resin impregnation into the fibers may be insufficient to cause swelling of molded articles, and high-strength molded articles may fail to be obtained.

A molded article of the present invention can be obtained by molding the SMC described above. Heating compression molding is preferred as the molding method in terms of excellent productivity and design versatility.

In the heating compression molding, for example, a molded article is produced by weighing a predetermined amount of the SMC, putting the SMC into a mold preheated to 110 to 180°C, clamping the mold in a compression molding machine to shape the molding material, curing the molding material by holding a molding pressure of 0.1 to 30 MPa, and then removing the resulting molded article. As for specific molding conditions, a molding condition that a molding pressure of 1 to 20 MPa is held in a mold for 1 to 5 minutes per mm of the molded article thickness at a mold temperature of 120 to 160°C is preferred. A molding condition that a molding pressure of 1 to 20 MPa is held for 1 to 3 minutes per mm of the molded article thickness at a mold temperature of 140 to 160°C is more preferred, because productivity is further improved.

The SMC of the present invention is excellent in productivity, moldability, and the like, and the resulting molded articles can be suitably used for automotive parts, railroad vehicle parts, aerospace machine parts, ship parts, housing equipment parts, sports parts, light vehicle parts, construction and civil engineering parts, housings for OA equipment, and the like.

### [Examples]

The present invention will be described in more detail below with examples, but the present invention is not limited to these examples. The hydroxyl value was measured as the number of milligrams of potassium hydroxide (mgKOH/g) required to neutralize the acetic acid formed when 1 g of a resin sample was reacted with an acetylating agent at the specified temperature and time based on the method specified in JIS K-0070. The acid value was measured as the number of milligrams of potassium hydroxide (mgKOH/g) required to neutralize a free fatty acid, a resin acid, or the like contained in 1 g of a resin sample based on the method specified in JIS K-0070.

### (Synthesis Example 1: Synthesis of Vinyl Ester Resin (1))

In a 2-L flask equipped with a thermometer, a nitrogen inlet tube, and a stirrer, 677 parts by mass of an epoxy resin ("EPICLON 850" available from DIC Corporation, bisphenol A epoxy resin, epoxy equivalent weight 188), 310 parts by mass of methacrylic acid, and 0.29 parts by mass of t-butylhydroquinone were charged. The temperature was raised to 90°C under distribution of a gas mixture of nitrogen and air at a ratio of 1:1. Here, 0.60 parts by mass of 2-methylimidazole was added, and the temperature was raised to 110°C to allow a reaction to proceed for 10 hours. When the acid value became 6 or less, the reaction was terminated. After cooling to around 60°C, the reaction product was removed from the reaction vessel. Thus, a vinyl ester resin (1) with a hydroxyl value of 217 mgKOH/g was obtained.

### (Synthesis Example 2: Synthesis of Vinyl Ester Resin (2))

In a 2-L flask equipped with a thermometer, a nitrogen inlet tube, and a stirrer, 656 parts by mass of an epoxy resin ("EPICLON 850" available from DIC Corporation, bisphenol A epoxy resin, epoxy equivalent weight 188), 147 parts by mass of bisphenol A, and 0.4 parts by mass of 2-methylimidazole were charged. The temperature was raised to 120°C to allow a reaction to proceed for three hours, and the epoxy equivalent weight was measured. After the epoxy equivalent was determined to be 365 as set, and after cooling to around 60°C, 185 parts by mass of methacrylic acid and 0.29 parts by mass of t-butylhydroquinone were charged, and the temperature was raised to 90°C under distribution of a gas mixture of nitrogen and air at a ratio of 1:1. Here, 0.18 parts by mass of 2-methylimidazole was added, and the temperature was raised to 110°C to allow a reaction to proceed for 10 hours. When the acid value became 6 or less, the reaction was terminated. After cooling to around 60°C, the reaction product was removed from the reaction vessel. A vinyl ester resin (2) with a hydroxyl value of 209 mgKOH/g was thus obtained.

### (Preparation Example 1: Preparation of Resin Composition (1))

To a resin solution of 48.1 parts by mass of the vinyl ester resin (1) and 11.9 parts by mass of the vinyl ester resin (2) dissolved in 40.0 parts by mass of phenoxyethyl methacrylate, 22.0 parts by mass of a polyisocyanate ("COSMONATE LL" available from Mitsui Chemicals & SKC Polyurethanes Inc., aromatic polyisocyanate), and 1.2 parts by mass of a polymerization initiator ("Kayacarbon AIC-75" available from Kayaku Akzo Corporation, organic peroxide), and 0.035 parts by mass of a polymerization inhibitor (p-benzoquinone; hereinafter abbreviated as polymerization inhibitor (1)) were blended to obtain a resin composition (1) .

### (Example 1: Production and Evaluation of SMC (1))

The resin composition (1) obtained above was applied to a laminated film of polyethylene and polypropylene so that the amount applied was 860 g/m² on average. Carbon fibers obtained by cutting carbon fiber roving ("T700SC-12000-50C" available from Toray Industries, Inc.) to 12.5 mm (hereinafter abbreviated as carbon fibers (1)) were dropped from the air onto the laminated film with the resin composition under the predetermined conditions listed in Table 1 so that the carbon fiber content was 55% by mass. The carbon fibers (1) sandwiched between the films with the resin composition (1) applied thereon similarly were impregnated with the resin, and then left at 25±5°C for four hours, resulting in SMC (1). The weight of the SMC was 2 kg/m².

The compressed air pressure was regulated by a regulator attached to each of compressed air outlets (internal diameter 4 mm, length 80 mm). The compressed air outlets were placed at a pitch of 200 mm in the flow direction in a carbon fiber drop region of the cutter, 1000 mm in the width direction and 1200 mm in the flow direction. The pitch refers to the distance between the centers of the outlet cross-sections. The center of the outlet crosssection was 3 mm above the carrier film.

### (Examples 2 to 6: Production and Evaluation of SMCs (2) to (7))

SMCs (2) to (7) were obtained in the same manner as in Example 1 except for the fiber addition conditions in Table 1, and then each SMC was evaluated.

### (Comparative Examples 1 to 4: Production and Evaluation of SMCs (R1) to (R4))

SMCs (R1) to (R4) were obtained in the same way as in Example 1 except for the fiber addition conditions in Table 2, and then each SMC was evaluated.

### [Measurement of Oriented Fibers]

In a range of 20 mm from an edge of each of the SMCs obtained above, 50 measurement points (20 mm × 50 mm) on each of left and right sides were selected, and the angle of each fiber bundle in this range was measured with a protractor. The fiber bundles only partially contained in the range were also measured. The proportion of fiber orientation of 30° or less in the total number of fiber bundles measured was calculated and determined as the proportion of fibers oriented at 30° or less.

### [Resin Flowability Evaluation]

Three regions each 100 mm × 100 mm touching the sheet edge of the SMC (1) obtained above were arbitrarily selected, cut, and peeled from the films. The resulting three pieces were stacked, set in the center of a 30 cm × 30 cm flat mold (mold clearance 2.5 mm), and molded at a press mold temperature of 150°C, a press time of 5 minutes, and a press pressure of 12 MPa. The maximum length of a section of the molded article in which separating from the reinforcing fibers, only the resin flowed out was measured, and the resin flowability was evaluated according to the following criteria.

Good: The section in which only the resin flows out in the SMC molded article edge is less than 5 mm.

Fair: The section in which only the resin flows out in the SMC molded article edge is 5 mm or more and less than 10 mm.

Poor: The section in which only the resin flows out in the SMC molded article edge is 10 mm or more.

### [Stretchability Evaluation]

Three regions each 100 × 100 mm touching the sheet edge of the SMC (1) obtained above were arbitrarily selected, cut, and peeled from the films. The resulting three pieces were stacked, set in the center of a 30 cm × 30 cm flat mold (mold clearance 2.5 mm), and molded at a press mold temperature of 150°C, a press time of 5 minutes, and a press pressure of 12 MPa. In doing so, the area of the molded article that was stretched and expanded in the mold relative to the surface area (900 cm²) inside the mold was measured, and the stretchability was evaluated according to the following criteria.

Good: The area occupied by the SMC molded article in the mold was 100%.

Fair: The area occupied by the SMC molded article in the mold was 95% or more and less than 100%.

Poor: The area occupied by the SMC molded article in the mold was less than 95%.

**[Table 1]**

| Table 1 | Ex. 1 | Ex. 2 | Ex. 3 | Ex. 4 | Ex. 5 | Ex. 6 | Ex. 7 |
|---|---|---|---|---|---|---|---|
| SMC | (1) | (2) | (3) | (4) | (5) | (6) | (7) |
| Proportion (X1) | 34 | 44 | 62 | 75 | 34 | 44 | 75 |
| Proportion (X2) | 28 | 28 | 28 | 28 | 34 | 34 | 34 |
| Compressed air pressure (MPa) | 0.03 | 0.05 | 0.03 | 0.05 | 0.03 | 0.05 | 0.05 |
| Outlet pitch (mm) | 200 | 200 | 100 | 100 | 200 | 200 | 100 |
| Resin flowability | Fair | Good | Good | Good | Fair | Good | Good |
| Stretchability | Good | Good | Good | Good | Good | Good | Good |

**[Table 2]**

| Table 2 | Comp. Ex. 1 | Comp. Ex. 2 | Comp. Ex. 3 | Comp. Ex. 4 |
|---|---|---|---|---|
| SMC | (R1) | (R2) | (R3) | (R4) |
| Proportion (X1) | 18 | 26 | 91 | 26 |
| Proportion (X2) | 28 | 28 | 28 | 34 |
| Compressed air pressure (MPa) | Not used | 0.05 | 0.05 | 0.03 |
| Outlet pitch (mm) | Not used | 75 | 75 | 400 |
| Resin flowability | Poor | Poor | Good | Poor |
| Stretchability | Good | Good | Poor | Good |

It was demonstrated that the sheet molding compounds (SMCs) of the present invention in Examples 1 to 7 had an excellent balance between resin flowability and stretchability.

On the other hand, it was demonstrated that the resin flowability was uncontrollable in Comparative Examples 1, 2, and 4 in which the proportion (X) of reinforcing fibers oriented at 30° or less in reinforcing fibers contained in the section 20 mm from the edge is lower than 28%, which is the lower limit of the present invention.

It was demonstrated that the stretchability was insufficient in Comparative Example 3 in which the proportion (X) of reinforcing fibers oriented at 30° or less in reinforcing fibers contained in the section within 20 mm from the edge is higher than 90%, which is the upper limit of the present invention.

## Claims

1. A sheet molding compound comprising reinforcing fibers impregnated with a resin composition, wherein a proportion (X1) of reinforcing fibers oriented at 30° or less in reinforcing fibers contained in a section (A1) within 20 mm from an edge of the sheet molding compound is 28 to 90%.

2. The sheet molding compound according to claim 1,
wherein a proportion (X2) of reinforcing fibers oriented at 30° or less in reinforcing fibers contained in a section (A2) exceeding 20 mm from the edge is 25 to 40%.

3. The sheet molding compound according to claim 1 or 2, wherein the reinforcing fibers are carbon fibers.

4. A method for manufacturing the sheet molding compound according to any one of claims 1 to 3, the method comprising a step of orienting the reinforcing fibers before impregnating the reinforcing fibers with the resin composition.

5. A molded article using the sheet molding compound according to any one of claims 1 to 3.
